(19) Europäisches Patentamt
European Patent Office
Office européen des brevets

(11) Veröffentlichungsnummer: **0 282 770**
**B1**

# (12) EUROPÄISCHE PATENTSCHRIFT

(45) Veröffentlichungstag der Patentschrift: **27.06.90**

(51) Int. Cl.⁵: **C08F 20/54,** C07B 57/00

(21) Anmeldenummer: **88102605.8**

(22) Anmeldetag: **23.02.88**

(54) **Optisch aktive (Meth)acrylamide, Verfahren zu ihrer Herstellung und ihre Verwendung zur Racematspaltung.**

(30) Priorität: **04.03.87 DE 3706890**

(43) Veröffentlichungstag der Anmeldung:
**21.09.88 Patentblatt 88/38**

(45) Bekanntmachung des Hinweises auf die Patenterteilung:
**27.06.90 Patentblatt 90/26**

(84) Benannte Vertragsstaaten:
**BE CH DE FR GB IT LI NL**

(56) Entgegenhaltungen:
**EP-A- 0 218 089**
**DE-A- 2 500 523**

(73) Patentinhaber: **BAYER AG,**
**D-5090 Leverkusen 1 Bayerwerk(DE)**

(72) Erfinder: **Bömer, Bruno, Dr., Max-Planck-Strasse 53,**
**D-5060 Bergisch-Gladbach 2(DE)**
Erfinder: **Grosser, Rolf, Dr., Gellertstrasse 9,**
**D-5090 Leverkusen 1(DE)**
Erfinder: **Schwartz, Ulrich, Dr., Wiesdorfer Platz 10,**
**D-5090 Leverkusen 1(DE)**
Erfinder: **Arlt, Dieter, Prof. Dr., Rybniker Strasse 2,**
**D-5000 Köln 80(DE)**
Erfinder: **Piejko, Karl-Erwin, Dr., Roggendorfstrasse 57,**
**D-5000 Köln 80(DE)**

EP 0 282 770 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft optisch aktive Homo- und Copolymere aus optisch aktiven (Meth)acrylamiden, die auf Kieselgel immobilisiert sind, Verfahren zu ihrer Herstellung sowie ihre Verwendung als Adsorbens, insbesondere als stationäre Phase zur chromatographischen Racematspaltung.

Ein wesentliches Problem der präparativen Chemie stellt die Trennung von racemischen Gemischen in die Antipoden dar. Hierzu gewinnen chromatographische Trennmethoden unter Verwendung optisch aktiver Adsorbentien als stationäre Phase immer mehr an Bedeutung. Bisherige Ergebnisse sind jedoch wenig zufriedenstellend.

So ist der Trenneffekt der aus DE-OS 25 00 523 bekannten optisch aktiven Adsorbentien bei Racematen bestimmter Stoffklassen zum Teil so gering, daß der technischen Anwendbarkeit einer solchen Racematspaltung deutliche Grenzen gesetzt sind.

Auf Kieselgel immobilisierte Polymere sind bekannt. So beschreibt die EP-A-0 155 637 die Herstellung von Kieselgelen, an die optisch aktive Polymere covalent gebunden sind sowie die Verwendung dieser Kieselgele zur chromatographischen Trennung einiger (spezieller) Racemate. Als optisch aktive Polymere werden dabei Polyaminosäuren, Polysaccharide, Polysaccharid-Derivate sowie synthetische Polymere, die eine molekulare Dissymmetrie der Hauptkette besitzen, eingesetzt. Polymere mit chiralen Seitengruppen wurden nicht verwendet.

G. Blaschke et. al., Angew. Chemie 98, 808 (1986) beschreibt die Herstellung von an Silicagel gebundenen optisch aktiven Polyamiden aus Monomeren der allgemeinen Formel 1a - 1c:

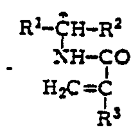

(1)

a: $R^1 = C_6H_5CH_2$, $R^2 = CO_2C_2H_5$, $R^3 = H$;
b: $R^1 = C_6H_5$, $R^2 = R^3 = CH_3$;
c: $R^1 = c\text{-}C_6H_{11}$, $R^2 = R^3 = CH_3$

sowie deren Verwendung zur chromatographischen Trennung einiger chiraler Arzneistoffe.

Die Japanische Anmeldung J 6 11 62-750 A beschreibt Füllstoffe zur Racemattrennung, die durch Umsetzung von Kieselgel mit einem Copolymeren aus einem optisch aktiven (Meth)acrylamid der Formel 2 und einem polymerisierbaren Silanisierungsmittel der Formel 3

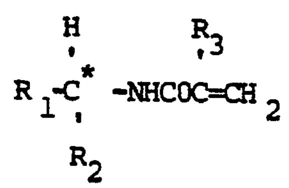

(2)

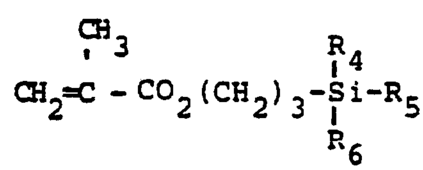

(3)

erhalten werden, in denen

$R_1$ = Phenyl, 1- oder 2-Naphthyl oder mit einer niedrig-Alkylgruppe substituiertes Phenyl,
$R_2$ = niedrig-Alkyl,
$R_3$ = H oder Methyl sind und
$R_4$, $R_5$ und $R_6$ jeweils Alkyl-, Alkoxy-, Hydroxy- oder Halogen-Gruppen sein können, wobei aber mindestens eine der Gruppen Alkoxy oder Halogen sein muß.

Analog werden in der Japanischen Anmeldung 6 11 62-751 A Konjugate aus Kieselgelen und Copolymeren aus optisch aktiven Monomeren der Formel 4 und polymerisierbaren Silanisierungsmitteln der Formel 3 beschrieben.

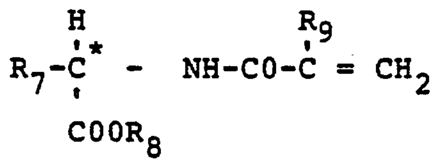

(4)

$R_7$ = Phenyl, Benzyl, 1- oder 2-Naphthyl, 2-Naphthylmethyl, 2-Indolylmethyl, Cyclohexyl-methyl, niedrigalkylsubstituiertes Phenyl, Carboalkoxy, Halogen oder Hydroxy
$R_8$ = niedrig-Alkyl , $R_9$ = H oder Methyl.

Die Füllstoffe sind zur Trennung verschiedener Racemate sowie von Atropisomeren geeignet.

Die Erfindung betrifft auf Kieselgel immobilisierte, optisch aktive Homo- und/oder Copolymere aus

A) 10 - 100 Gew.-%, vorzugsweise 30 - 100 Gew.-% optisch aktiver Monomereinheiten der Formel (5)

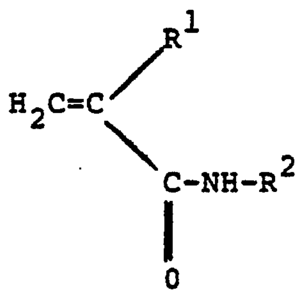

(5)

in welcher
$R^1$ - Wasserstoff oder Methyl, und
$R^2$ - eines der Stereoisomere der jeweils acht möglichen stereoisomeren Formen der optisch aktiven Reste der Formeln

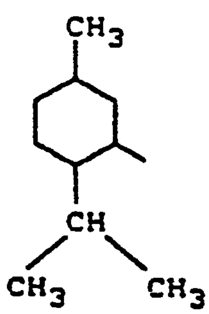

oder

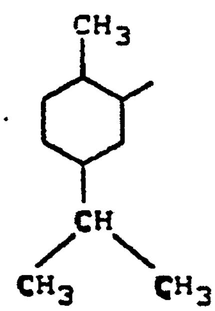

darstellen,
und

B) 90 - 0 Gew.-%, bevorzugt 70 - 0 Gew.-% von Comonomereinheiten aus der Gruppe $C_1$-$C_8$-Alkyl-(Meth)acrylate, Styrol, Acrylnitril, (Meth)acrylamid, sowie am Stickstoff substituierte (Meth)acrylamide.

Besonders bevorzugt sind solche Polymere, die ausschließlich aus der Komponente A bestehen.

Weiterhin ist es möglich, 0,1 - 50, vorzugsweise 0,5 - 25 Mol.-% bezogen auf die Komponenten A und B einer Comonomereinheit zu verwenden, die an Kieselgel covalent binden kann oder eine funktionelle Gruppe trägt, die eine covalente Verknüpfung mit Kieselgel ermöglicht (Komponente C).

Bevorzugte Verbindungen der Komponente A sind solche, in welchen
$R^1$ - für Wasserstoff oder Methyl steht, und
$R^2$ - ein Stereoisomer der jeweils acht möglichen stereoisomeren Formen des optisch aktiven Restes der Strukturformel

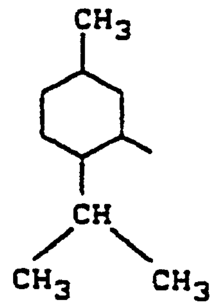

darstellt.

Besonders bevorzugt sind 1-Menthyl(meth)acrylamid, d-Menthyl(meth)acrylamid und d-Neomenthyl(meth)acrylamid als Komponente A.

Die Monomeren der Komponente A werden erhalten, indem man optisch aktive Amine der Formel (6)

$R^2$-$NH_2$(6),

in welcher
$R^2$ - die oben angegebene Bedeutung hat,
oder deren Säureadditionsprodukte mit Acrylsäurederivaten der Formel (7)

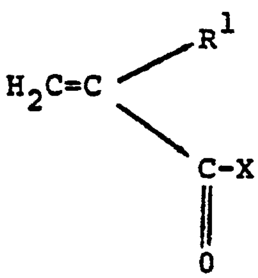

(7)

in welcher
X - für eine abspaltbare Gruppe steht,
und $R^1$ die oben angegebene Bedeutung hat
gegebenenfalls in Anwesenheit einer Base in inerten organischen Lösungsmitteln umsetzt.

Als abspaltbare Gruppe seien erwähnt: Halogen, insbesondere Chlor oder Brom oder eine Gruppe der Formel $OR^3$, in der $R^3$ eine $C_1$-$C_4$-Alkylgruppe darstellt oder eine

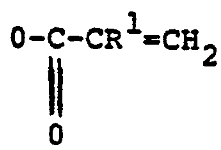

Gruppe. Darüber hinaus können auch unsymmetrische Säureanhydride eingesetzt werden.

Die als Ausgangsstoffe verwendeten Acrylsäurederivate der Formel 3 sind bekannt (Beilsteins Handbuch der organischen Chemie, Band 2, 3. Ergänzungswerk, Seite 1293; Band 2, Hauptwerk, Seite 400).

Die als Ausgangsstoffe verwendeten optisch aktiven Amine der Formel 2 sind bekannt oder können nach bekannten Methoden hergestellt werden (E. Beckmann, Liebigs Ann. Chem. 250, 322 ff (1889), H.C. Brown, P.C. Garg, J. Am. Chem. Soc. 83, 2952 (1961), F. Tutin, F.S. Kipping, J. Chem. Soc. London 85, 65 - 78 (1904), J. Read, Chem. Rev. 7, 1 (1930), H. Feltkamp, F. Koch und Tran Nhut Thanh, Liebigs Ann. Chem. 707, 78 (1967) ).

Geeignete Säureadditionsverbindungen der verwendeten Amine sind Salze dieser Amine mit anorganischen oder organischen Säuren. Bevorzugt sind Mineralsäuren wie beispielsweise Salzsäure, Bromwassersäure, Schwefelsäure, Phosphorsäure oder organische Säuren wie Essigsäure, Methan-, Ethan-, Benzol- oder Toluolsulfonsäure.

Als Lösungsmittel eignen sich alle inerten organischen Lösungsmittel. Bevorzugt sind Kohlenwasserstoffe wie beispielsweise Benzol, Toluol, Xylol oder Erdölfraktionen, oder Halogenkohlenwasserstoffe wie beispielsweise Di-, Tri- oder Tetrachlormethan, Dichlorethan oder Trichlorethylen.

Als Basen eignen sich die üblichen anorganischen und organischen Basen. Bevorzugt sind Alkali- oder Erdalkalihydroxide wie beispielsweise Natrium-, Kalium-, Lithium-, Calcium- oder Bariumhydroxid,

Alkali- oder Erdalkalicarbonate wie beispielsweise Natrium- oder Kaliumcarbonat, Alkalialkoholate wie beispielsweise Natriumethanolat, Kaliumethanolat, Natriummethanolat oder Kaliummethanolat oder Amine wie beispielsweise Triethylamin, Pyridin oder Morpholin.

Die Reaktionstemperaturen können in einem größeren Bereich variiert werden. Im allgemeinen arbeitet man in einem Bereich von -20°C bis +100°C, bevorzugt von -10°C bis +60°C.

Als Comonomere der Komponente C seien beispielhaft genannt: Polymerisierbare Silanisierungsmittel wie die Verbindungen der Formel 3, Vinyltrichlorsilan oder Vinyltrialkoxysilane; Hydroxylgruppen enthaltende Monomere wie Hydroxyalkyl(meth)acrylate oder Glycerinmonomethacrylat; Epoxidgruppen enthaltende Monomere wie Glycidyl(meth)acrylat; Isocyanatgruppen enthaltende Monomere wie 2-Isocyanatoethylmethacrylat oder 4-Isocyanatostyrol; 2- bzw. 4-Isothiocyanatophenylmethacrylat; (Meth)acrylsäurechlorid oder (Meth)acrylsäureanhydrid sowie Carboxylgruppen enthaltende Monomere wie (Meth)acrylsäure, Itaconsäure oder Maleinsäure. Die Verknüpfungsgruppen enthaltenden Monomere werden in solchen Mengen einpolymerisiert, daß pro Polymerkette im Mittel mindestens eine funktionelle Gruppe eingeführt wird. Im allgemeinen werden zwischen 0,1 und 50 Mol.-%, vorzugsweise 0,5 und 25 Mol.-% (besonders bevorzugt 1 - 10 Mol.-%) dieser Comonomeren eingesetzt.

Die erfindungsgemäßen auf Kieselgel immobilisierten optisch aktiven Polymeren bzw. Copolymeren, die zumindest 10 Gew.-% Monomereinheiten der allgemeinen Formel 5 enthalten, können nach drei Syntheseprinzipien hergestellt werden.

A) Einführung covalent gebundener polymerisationsaktiver Doppelbindungen in Kieselgel und Polymerisation bzw. Copolymerisation des optisch aktiven (Meth)acrylamides in Gegenwart dieses modifizierten Kieselgels. Dabei wird das optisch aktive Polymer durch Copolymerisation covalent mit dem Kieselgel verknüpft.

B) Herstellung löslicher Copolymerisate aus den (Meth)acrylamiden der Formel 5 und Monomeren mit funktionellen Gruppen, die entweder direkt mit Kieselgel oder einem entsprechend modifizierten Kieselgel reagieren können oder unter Zuhilfenahme eines mehrfunktionellen Kopplungsmittels covalent mit Kieselgel oder funktionalisiertem Kieselgel verknüpft werden können.

C) Polymerisation oder Copolymerisation der (Meth)acrylamide der Formel 5 in Gegenwart von unmodifizierten porösen Kieselgelen, wobei sehr wahrscheinlich durch Verschlaufung der Polymerketten im Kieselgelgerüst eine Immobilisierung des (Co)Polymeren erreicht wird.

Die verwendeten Kieselgele sind die üblicherweise für chromatographische Zwecke verwendeten Kieselgelqualitäten. Ihre Korngröße kann zwischen 1 µm und 10 mm, vorzugsweise zwischen 1 und 500 µm variieren. Bevorzugt werden poröse Materialien mit mittleren Porendurchmessern von 50 - 50 000 Å eingesetzt. Die Menge des immobilisierten optisch aktiven Polymers beträgt 0,2 bis 100 Gew.-%, vorzugsweise 1 - 50 Gew.-% bezogen auf Kieselgel.

Außer unmodifizierten Kieselgelen, welche Si-OH-Gruppen enthalten, können auch Kieselgele eingesetzt werden, in die nach bekannten Verfahren andere funktionelle Gruppen wie beispielsweise R-OH-, Amino-, Diol- oder Carboxylgruppen eingeführt wurden.

Syntheseprinzip A

Nach dem Syntheseprinzip A kann beispielsweise Kieselgel, welches mit Alkohol- bzw. Diolgruppen modifiziert wurde, nach an sich bekannten Methoden mit Acrylsäure- oder Methacrylsäurechlorid oder Acrylsäure- bzw. Methacrylsäureanhydrid in Gegenwart tert.-Amine verestert werden. In Gegenwart des so mit (Meth)acrylsäureestergruppen modifizierten Kieselgels werden dann die optisch aktiven (Meth)acrylamide der Formel 5 polymerisiert oder copolymerisiert. Die Polymerisation kann in geeigneten Lösungsmitteln wie (cyclo)-aliphatischen Kohlenwasserstoffen, aromatischen Kohlenwasserstoffen, Halogenkohlenwasserstoffen oder Carbonsäureestern wie Ethylacetat oder Butylacetat durchgeführt werden. Als Initiatoren können Azoinitiatoren wie Azoisobutyronitril, Peroxide wie Benzoylperoxid oder Dilauroylperoxid, Perester wie tert.-Butylperpivalat oder tert.- Butylper-2-ethylhexanoat oder Percarbonate wie Diisopropyl- bzw. Dicyclohexylperoxydicarbonat verwendet werden.

Die Polymerisationstemperatur und Polymerisationsdauer richtet sich nach der Art des eingesetzten Initiators sowie dem gewünschten Umsetzungsgrad des Monomeren.

Bei dieser Verfahrensweise copolymerisiert das (Meth)acrylamid-Monomere mit den an das Kieselgel covalent fixierten (Meth)acrylestergruppen und man erhält ein covalent an die Kieselgelmatrix gebundenes optisch aktives Poly(meth)acrylamid.

Nach dem angestrebten Umsetzungsgrad wird die Polymerisation durch Abkühlen und/oder Zugabe eines Radikalinhibitors abgebrochen und das polymermodifizierte Kieselgel intensiv mit guten Lösungsmitteln für das Monomer und das nicht gebundene Polymer gewaschen. Der Gehalt an gebundenem Polymer kann leicht über den Stickstoffgehalt des Kieselgelkonjugates ermittelt werden.

Analoge Ergebnisse erhält man, wenn man ein mit Aminogruppen modifiziertes Kieselgel (Aminophase) mit (Meth)acrylchlorid bzw. (Meth)acrylsäureanhydrid umsetzt und das so enthaltene, mit (Meth)acrylamidgruppen modifizierte Kieselgel mit dem optisch aktiven (Meth)acrylamidmonomeren copolymerisiert.

Ein weiteres Vorgehen besteht in der Umsetzung eines unmodifizierten Kieselgels mit einem Silanisierungsmittel, welches eine polymerisierbare Doppelbindung besitzt und anschließende Copolymerisation mit dem optisch aktiven (Meth)acrylamidmonomeren. Als geeignete Silanisierungsmittel mit polymerisierbaren Doppelbindungen seien genannt: γ-Methacryloyloxypropyl- trimethoxysilan, Vinyl-trichlorsilan, Vinyltrimethoxysilan, Vinyltriethoxysilan sowie Vinylmethyldiethoxysilan.

Syntheseweg B

Eine Verknüpfung nach dem Syntheseprinzip B ist beispielsweise auf folgenden Wegen möglich:
Das optisch aktive(Meth)acrylamidmonomere der Formel 5 wird mit einem copolymerisierbaren Silanisierungsmittel sowie gegebenenfalls mit weiteren nicht optisch aktiven Comonomeren copolymerisiert. Als copolymerisierbare Silanisierungsmittel können beispielsweise γ-Methacryloyloxypropyl-trimethoxysilan, Vinyltrichlorsilan, Vinyltrimethoxysilan, bzw. Vinyltriethoxysilan verwendet werden.

Vorzugsweise werden Methacrylate der allgemeinen Formel 3 eingesetzt. Die Copolymerisation wird in einem inerten Lösungsmittel durchgeführt, die enthaltene Polymerlösung mit unmodifiziertem, vorzugsweise intensiv getrocknetem Kieselgel versetzt und so lange gerührt, bis die Kopplungsreaktion beendet ist. Vorzugsweise wird die Kopplung bei erhöhter Temperatur, z.B. bei 40 - 140°C und gegebenenfalls unter Zusatz von Pyridin durchgeführt.

Eine weitere Möglichkeit zur Herstellung der modifizierten Kieselgele besteht in der Copolymerisation des optisch aktiven(Meth)acrylamidmonomeren der Formel 5 mit Hydroxylgruppen enthaltenden Comonomeren wie Hydroxyethyl-(meth)acrylat, Hydroxy-propyl-(meth)acrylat oder Glycerinmonomethacrylat. Die so erhaltenen hydroxylgruppenhaltigen Polymeren können zunächst mit einem Überschuß eines Di- oder Polyisocyanates und anschließend mit einem Kieselgel, welches Hydroxyl- oder Aminogruppen enthält unter Ausbildung covalenter Bindungen umgesetzt werden.

Außerdem können die hydroxylgruppen-haltigen Polymeren mit einem Kieselgel zur Reaktion gebracht werden, dessen Amino- oder Hydroxylgruppen vorher mit einem Überschuß eines Di- oder Polyisocyanates umgesetzt wurden.

Weiterhin ist es möglich, anstelle der Di- oder Polyisocyante entsprechende NC0-terminierte Präpolymere einzusetzen. Über den Abstand der NC0-Gruppen im Diisocyanat bzw. Präpolymer kann der Abstand des optisch aktiven Polymeren vom Kieselgel variiert werden.

Ein weiteres Verfahren nach dem Syntheseprinzip B besteht in der Umsetzung eines Copolymeren aus optisch aktivem (Meth)acrylamid der Formel 5 und Glycidyl(meth)acrylat mit einem Aminogruppen oder Carboxylgruppen enthaltenden modifizierten Kieselgel.

Weiterhin können optisch aktive Copolymere mit eingebauten Isocyanatgruppen z. B. aus Isocyanatoethylmethacrylat oder Isocyanatostyrol mit Kieselgel bzw. mit Hydroxyl- bzw. Aminogruppen enthaltenden Kieselgelen umgesetzt werden.

Copolymere mit 2- bzw. 4-Isothiocyanatophenylmethacrylat können mit aminogruppen-haltigen Kieselgelen unter Ausbildung von Thioharnstoffbindungen zur Reaktion gebracht werden.

Es können ferner Copolymere aus den optisch aktiven (Meth)acrylamiden und (Meth)acrylsäurechlorid an Hydroxyl- oder Aminogruppen enthaltenden Kieselgelen fixiert werden. Analog reagieren Copolymere mit Methacrylsäureanhydrid.

Copolymere, die Carboxylgruppen aus z.B. (Meth)acrylsäure oder Itaconsäure enthalten, können mit aminogruppenhaltigen Kieselgelen, z.B. in Gegenwart von Carbodiimiden verknüpft werden.

Syntheseweg C

Die Herstellung der erfindungsgemäßen an Kieselgel immobilisierten optisch aktiven Polymere oder Copolymere nach dem Syntheseprinzip C kann beispielsweise so erfolgen, daß ein unmodifiziertes poröses Kieselgel in einer Lösung, die ein optisch aktives Monomer der Formel 5, gegebenenfalls weitere, mit dem Kieselgel nicht reagierende Monomere und einen Initiator für die radikalische Polymerisation enthält, suspendiert, die Suspension zunächst bei Raumtemperatur für einige Minuten bis 24 Stunden aufbewahrt und dann auf die Polymerisationstemperatur erwärmt.

Als Lösungsmittel können sowohl solche verwendet werden, die die Monomeren und das Polymer lösen, wie aliphatische, cycloaliphatische, aromatische oder chlorierte Kohlenwasserstoffe bzw. Carbonsäureester,als auch solche, die nur die Monomeren und nicht das Polymer lösen wie Methanol, Ethanol, Acetonitril oder Dimethylformamid. Dabei können das Monomere oder das Gemisch der Monomeren je nach Temperatur und Dauer des Erhitzens teilweise oder fast vollständig polymerisiert werden. Anschließend wird das Kieselgelkonjugat abgesaugt, intensiv mit Lösungsmitteln für das Polymere bzw. Copolymere gewaschen und getrocknet.

In ähnlicher Weise können nach dem Syntheseprinzip C auch Kieselgele, die beispielsweise mit Alkohol-, Amino-, Diol-, Carboxyl-, Trimethylsilyl- oder Dimethyloctylsilylgruppen modifiziert wurden, umgesetzt werden.

In einigen Fällen kann die Trennleistung, insbesondere für stärker polare Racemate, durch Nachsilanisierung des Polymer-Kieselgel-Konjugates erhalten nach allen Verfahrensweisen mit einem üblichen

Silanisierungsmittel wie Trimethylchlorsilan, Hexamethyldisilazan oder Dimethyloctylchlorsilan verbessert werden.

Die Erfindung betrifft außerdem die Verwendung der erfindungsgemäß immobilisierten Polymerisate zur chromatographischen Trennung von racemischen Gemischen in die optischen Antipoden.

Insbesondere betrifft die Erfindung die Verwendung der erfindungsgemäßen immobilisierten Polymerisate zur chromatographischen Trennung von Wirkstoffracematen in die optischen Antipoden wie beispielsweise derivatisierte Aminosäuren, β-Lactamverbindungen, Pyrethroide, Pyrethroidcarbonsäuren, monocyclische oder bicyclische Terpenderivate, Azolverbindungen, Nitro- oder Cyanodihydropyridine, Dihydropyridincarbonsäuren, -carbonsäureester oder -carbonamide, Dihydropyridinlactone oder Sulfonyldihydropyridine. Besonders gut trennbar sind: Dihydropyridinverbindungen und Pyrethroidcarbonsäuren.

Überraschenderweise haben die erfindungsgemäßen auf Kieselgel immobilisierten optisch aktiven Polymere eine bessere Trennleistung als die aus dem Stand der Technik bekannten. So beträgt bei der Trennung des Racemats von 1,4-Dihydro-2,6-dimethyl-4-(2-trifluormethylphenyl)-3,5-di-carbonsäure-5-ethylester am erfindungsgemäßen Adsorbens 4b die Enantioselektivität $\alpha = 1{,}90$ bzw. die chromatographische Auflösung $R = 3{,}27$ gegenüber $\alpha = 1{,}08$ bzw. $R = 0{,}50$ im Falle des Adsorbens gemäß Vergleichsbeispiel A. Keine Trennung ($\alpha = 1{,}0$) wird im Falle des Vergleichsbeispiels B erzielt. Ferner weisen die erfindungsgemäß immobilisierten Polymerisate auch bei der Trennung größerer Mengen racemischer Gemische eine gute Trennleistung auf, was für eine technische Anwendung von großem Vorteil ist.

Die Trennung von Racematen in die Enantiomere unter Verwendung der erfindungsgemäß immobilisierten Polymerisate wird vorteilhafterweise unter hochleistungschromatographischen (HPLC) Bedingungen vorgenommen. Die Arbeitsmethodik der Enantiomerentrennung durch HPLC ist dem Fachmann vertraut. Die üblicherweise verwendeten Säulen werden bei Materialien mit einem Teilchendurchmesser größer 20 µm bevorzugt nach der Trocken-Packmethode, bei Materialien mit einem Teilchendurchmesser kleiner 20 µm naß, und zwar in Form von Suspensionen nach der Viskositätsmethode oder "balanced density Methode" gepackt. Als mobile Phase können bei der Elution alle organischen Lösungsmittel bzw. Lösungsmittelgemische verwendet werden, die das Polymerisat und oder die Kieselgelmatrix nicht angreifen. Die Zusammensetzung des Fließmittels kann je nach Art und Eigenschaft des zu trennenden Racemats in üblicher Weise ausgewählt und optimiert werden.

Die Trennleistung der erfindungsgemäß immobilisierten Polymerisate wird anhand einiger Racemate mit Hilfe des Kapazitätsverhältnisses $k'_1$ und $k'_2$, der Enantioselektivität $\alpha$ sowie der chromatographischen Auflösung R charakterisiert, wobei diese chromatographischen Parameter wie folgt definiert sind:

$$\text{Kapazitätsverhältnis } k'_{1(2)} = \frac{t_{1(2)} - t_o}{t_o}$$

$$\text{Enantioselektivität } \alpha = \frac{k'_2}{k'_1}$$

$$\text{chromatographische Auflösung } R = \frac{2\,(t_2 - t_1)}{w_1 + w_2}$$

$t_o$ = Totzeit der Säule
$t_{1(2)}$ = Retentionszeit des zuerst eluierten Enantiomers 1 bzw. des später eluierten Enantiomers 2
$w_{1(2)}$ = Basisbreite des Peaks 1 bzw. Peaks 2

I. Herstellung von (Meth)acrylamiden

Beispiel 1: Herstellung von 1-Menthylmethacrylamid

Zu 356 g (1.86 mol) 1-Menthylaminhydrochlorid und 376 g (3.71 mol) Triethylamin in 1.6 l Dichlormethan werden unter Rühren bei 0°C 194 g (1.86 mol) Methacrylsäurechlorid während 3 Std. zugetropft. Unter Erwärmen auf Raumtemperatur wird noch 2 Stunden nachgerührt. Das ausgefallene Triethylaminhydrochlorid wird abgesaugt und mit wenig Dichlormethan gewaschen. Die vereinigten organischen Phasen werden zweimal mit wäßriger Natriumchlorid-Lösung gewaschen, über Magnesiumsulfat getrocknet und einrotiert. Es wird aus Essigester oder Methanol/Wasser umkristallisiert, oder nach Zusatz von wenig 2,2'-Methylen-bis-(4-methyl-6-tert.-butylphenol im Hochvakuum bei 140-143°C destilliert.
Ausbeute: 376 g (90 % der Theorie)
Schmelzpunkt: 79-80°C
Drehwert: $(\alpha)_D^{20}$ = -87,1° (c=1, $CHCl_3$)

Beispiel 2 : Herstellung von d-Neomenthylmethacrylamid

Zu 191.7 g (1 Mol) d-Neomenthylaminhydrochlorid und 212,5 g (2,1 Mol) Triethylamin in 780 ml Dichlormethan werden bei Raumtemperatur 104,5 g (1 Mol) Methacrylsäurechlorid zugetropft. Unter Erwärmen auf Raumtemperatur wird noch 12 Stunden nachgerührt. Es wird dreimal mit wäßriger Natriumchloridlösung gewaschen, die organische Phase über Magnesiumsulfat getrocknet und einrotiert. Es wird aus Essigester umkristallisiert.
Ausbeute: 194,5 g (87 % der Theorie)
Schmelzpunkt: 111-112 °C
Drehwert: $(\alpha)_D^{20}$ = + 51,5° (C=1, $CH_2Cl_2$)

Beispiel 3: Herstellung von 1-Menthylacrylamid

Zu 155,3 g (1 Mol) 1-Menthylamin und 101,2 g (1 Mol) Triethylamin in 400 ml Dichlormethan werden unter Rühren bei 0°C 90.51 g (1 Mol) Acrylsäurechlorid während 3 Std. zugetropft. Unter Erwärmen auf Raumtemperatur wird noch 12 Std. nachgerührt. Es wird dreimal mit wäßriger Natriumchloridlösung gewaschen, die organische Phase über Magnesiumsulfat getrocknet und einrotiert. Es wird aus Acetonitril umkristallisiert.
Ausbeute: 184,2 g (88 % d. Theorie)
Schmelzpunkt: 136-137 °C
Drehwert: $(\alpha)_D^{20}$

II. Herstellung von am Kieselgel immobilisierten Polymeren

Beispiel 4:

a) 5 g Kieselgel Diolphase, mittlere Korngröße 5 µm, werden unter Feuchtigkeitsausschluß und unter $N_2$ in 120 ml Dioxan p.a. suspendiert. Dann werden 3,2 ml Methacrylsäureanhydrid und 2,5 ml Triethylamin p.a. zugegeben. Die Mischung wird 1 Stunde bei Raumtemperatur gerührt und 24 Stunden bei Raumtemperatur stehengelassen. Dann wird das Kieselgel über eine Glasfritte (G4) abgesaugt, dreimal in je 100 ml Dioxan 30 Minuten ausgerührt und zwischendurch gut trockengesaugt. Das Produkt wird im Ölpumpenvakuum bei Raumtemperatur getrocknet.
Ausbeute: 4,8 g
Analyse: C = 8,3 %, H = 1,9 %
Analyse des Ausgangsdiols: C = 7,7 %, H = 1,5 %

b) 3,0 g der veresterten Diolphase von 4a), 9,0 g 1-Menthylacrylamid und 30 mg Azobisisobutyronitril werden in 50 ml Toluol gelöst bzw. suspendiert. Der Ansatz wird von Sauerstoff befreit und unter Rühren 15 Minuten auf 80 °C innen erwärmt. Dann werden 250 mg 2,6-Ditertiärbutyl-4-methylphenol in 12 ml Toluol zugegeben und rasch abgekühlt. Das Kieselgel wird abgesaugt, mit Toluol gewaschen, in 50 ml Toluol, 50 ml Dioxan, 50 ml Cyclohexan und 50 ml Isopropanol je 30 Minuten ausgerührt und zwischendurch jeweils abgesaugt. Nach dem Trocknen im Ölpumpenvakuum bei Raumtemperatur erhält man 3,2 g modifiziertes Kieselgel. Stickstoffgehalt = 0,9 % ≙ 13,4 Gew.-% Poly-1-menthylacrylamid.

Beispiel 5:

3,0 g mit Methacrylsäureanhydrid veresterte Kieselgel-Diolphase nach Beispiel 4 a, 9,0 g d-Menthylacrylamid und 30 mg Azoisobutyronitril werden in 50 ml trockenem Toluol gelöst bzw. suspendiert

und nach dem Verfahren von Beispiel 4b polymerisiert und ausgewaschen. Man erhält 3,25 g modifiziertes Kieselgel mit einem Stickstoffgehalt von 1,1 % entsprechend 16,4 Gew.-% gebundenem Poly-d-menthylacrylamid.

Beispiel 6:

3,0 g mit Methacrylsäureanhydrid veresterte Kieselgel-Diolphase nach Beispiel 4a, 9,0 g 1-Menthylmethacrylamid amid und 30 mg Azobisisobutyronitril werdem in 50 ml trockenem Toluol gelöst bzw. suspendiert und nach dem Verfahren von Beispiel 4 b polymerisiert und ausgewaschen. Man erhält 2,85 g modifiziertes Kieselgel mit einem Stickstoffgehalt von 0,4 % entsprechend 6,3 Gew.-% gebundenem Poly-1-menthylmethacrylamid.

Beispiel 7:

Beispiel 6 wird wiederholt mit 9,0 g d-Neomenthylacrylamid anstelle von 1-Menthylmethacrylamid. Man erhält 3,0 g modifiziertes Kieselgel mit einem Stickstoffgehalt von 0,4 %, entsprechend 6,0 Gew.-% gebundenem Poly-d-neomenthylacrylamid.

Beispiel 8:

a) 20 g Kieselgel-Aminophase, mittlerer Teilchendurchmesser 10 µm, werden unter Feuchtigkeitsausschluß und $N_2$ in 480 ml Dioxan P.a. suspendiert. Nach Zugabe von 12,5 ml Methacrylsäureanhydrid und 10 ml Triethylamin P.a. wird die Mischung 1 Stunde bei Raumtemperatur gerührt und dann 24 Stunden unter gelegentlichem Umrühren bei Raumtemperatur stehen lassen. Das Kieselgel wird analog zu Beispiel 4a mit Dioxan gewaschen und getrocknet.
Ausbeute: = 19,9 g
Stickstoffgehalt: = 1,0 %
b) 3,0 g der Kieselgel-Methacrylamidphase nach 8a, 9,0 g 1-Menthylacrylamid und 30 mg Azobisisobutyronitril werden in 50 ml Toluol gelöst bzw. suspendiert und nach dem Verfahren von Beispiel 4 b polymerisiert und ausgewaschen.
Man erhält 3,15 g modifiziertes Kieselgel mit einem Stickstoffgehalt von 1,7 % entsprechend 10,4 Gew.-% gebundenem Poly-1-menthylacrylamid.

Beispiel 9:

a) 5 g unmodifiziertes Kieselgel,welches 2 Stunden bei 180°C und <1 mbar Druck getrocknet wurde, 1,0 g γ-Methacryloyloxypropyltrimethoxysilan, 10 mg Hydrochinon und 20 ml trockenes Toluol werden zusammengegeben, 1 Stunde bei Raumtemperatur gerührt und dann das Toluol im Wasserstrahlvakuum am Rotationsverdampfer bei einer Badtemperatur von 60°C entfernt. Der Rückstand wird unter Normaldruck und Feuchtigkeitsausschluß 5 Stunden auf 130°C erwärmt. Anschließend wird das Kieselgel je 20 Minuten 3 mal in 40 ml Toluol, 2 mal in 40 ml Isopropanol und 1 mal in 40 ml Aceton ausgerührt und jeweils zwischendurch abgesaugt. Nach dem Trocknen bei Raumtemperatur im Ölpumpenvakuum erhält man 5,25 g silanisiertes Kieselgel mit einem Kohlenstoffgehalt von 6,9 % entsprechend ca. 13,8 Gew.-% gebundenem Silanisierungsmittel.
b) 3,0 g des nach 9a silanisierten Kieselgels, 9,0 g 1-Menthylacrylamid und 30 mg Azoisobutyronitril werden in 50 ml Toluol nach dem Verfahren von Beispiel 4 b polymerisiert und ausgewaschen. Man erhält 3,1 g modifiziertes Kieselgel mit einem Stickstoffgehalt von 0,3 %, entsprechend 4,5 Gew.-% gebundenem Poly-1-menthylacrylamid.

Beispiel 10:

a) 28,5 g 1-Menthylacrylamid, 1,5 g γ-Methacryloyloxypropyltrimethoxysilan und 100 mg Azoisobutyronitril werden in 150 ml Toluol gelöst. Der Ansatz wird von Sauerstoff befreit und unter Stickstoff 8 Stunden auf 80 °C erwärmt.
b) 3,5 g getrocknetes Kieselgel, 3 ml der unter 10 a) hergestellten Copolymerlösung, 12 ml Toluol und 0,1 ml Pyridin p.a. werden unter Feuchtigkeitsausschluß 1 Stunde bei 40 °C, 1 Stunde bei 60 °C, 1 Stunde bei 80 °C und 14 Stunden unter Rückfluß gerührt. Anschließend wird 1 ml Hexamethyldisilazan zugegeben und weitere 24 Stunden unter Rückfluß gekocht. Das Kieselgel wird abgesaugt, dreimal je 20 Minuten in 30 ml Toluol, einmal in 30 ml Isopropanol und einmal in 30 ml Aceton ausgerührt und zwischendurch jeweils abgesaugt. Nach dem Trocknen bei Raumtemperatur im Ölpumpenvakuum erhält man 3,65 g modifiziertes Kieselgel mit einem Stickstoffgehalt von 0,6 %, entsprechend ≈ 9 Gew.-% gebundenem Poly-1-menthylacrylamid-Copolymer.

Beispiel 11:

a) 27 g 1-Menthylacrylamid, 3 g γ-Methacryloyloxypropyltrimethoxysilan und 100 mg Azoisobutyronitril werden in 150 ml Toluol gelöst und unter Stickstoff 8 Stunden auf 80 °C erwärmt.

b) 3,5g Kieselgel, welches nicht nachgetrocknet wurde, 3 ml der unter 11 a) hergestellten Copolymerlösung und 12 ml Toluol werden unter Feuchtigkeitsausschluß 1 Stunde bei 40 °C, 1 Stunde bei 60 °C, 2 Stunden bei 80 °C und 17 Stunden unter Rückfluß gerührt. Nach Zugabe von 1 g Hexamethyldisilazan wird der Ansatz 16 Stunden weiter bei ca. 105 °C gerührt. Der Ansatz wird abgesaugt, das Kieselgel jeweils 20 Minuten dreimal in 30 ml Toluol, einmal in 30 ml Isopropanol und einmal in 30 ml Aceton ausgerührt und jeweils zwischendurch abgesaugt. Nach dem Trocknen im Ölpumpenvakuum bei Raumtemperatur erhält man 3,2 g modifiziertes Kieselgel mit einem Stickstoffgehalt von 0,3 %, entsprechend ungefähr 5 Gew.-% gebundenem 1-Menthylacrylamid-Copolymer.

Beispiel 12.

a) 28,5 g 1-Menthylacrylamid, 1,5 g γ-Methacryloyloxypropyltrimethoxysilan und 100 mg Azoisobutyronitril werden in 150 ml trockenem Toluol gelöst und 16 Stunden unter Stickstoff bei 60 °C polymerisiert.

b) Analog zu Beispiel 11 b) werden 3,0 ml der unter 12 a) hergestellten Copolymerlösung mit 3,5 g nicht getrocknetem Kieselgel umgesetzt, mit 1,0 ml Hexamethyldisilazan nachsilanisiert und intensiv ausgewaschen. Man erhält 3,6 g modifiziertes Kieselgel mit einem Stickstoffgehalt von 0,4 %, entsprechend ca. 6 Gew.-% gebundenem 1-Menthylacrylamid-Copolymer.

Beispiel 13:

3,0 g Kieselgel, mittlerer Teilchendurchmesser 5 μm, 9,0 g 1-Menthylmethacrylamid, und 30 mg Azobisisobutyronitril werden in 50 ml trockenem Toluol gelöst bzw. suspendiert. Die Reaktionsmischung wird sorgfältig von Sauerstoff befreit und 4 Stunden bei Raumtemperatur sowie 15 Minuten bei 80 °C gerührt. Dann wird rasch abgekühlt und der Ansatz mit 250 mg 2,6-Ditertiärbutyl-4-methylphenol in 12 ml Toluol versetzt. Das modifizierte Kieselgel wird über eine feine Glasfritte abgesaugt, mit Toluol gewaschen, in 50 ml Toluol, 50 ml Dioxan, 50 ml Cyclohexan und 50 ml Isopropanol jeweils 30 Minuten ausgerührt und zwischendurch jeweils abgesaugt. Nach dem Trocknen bei Raumtemperatur im Ölpumpenvakuum erhält man 3,1 g modifiziertes Kieselgel. Stickstoffgehalt = 0,7 % entsprechend 11 Gew.-% gebundenes Poly-1-menthylmethacrylamid

Vergleichsbeispiel A

2,5 g nach der Vorschrift von Blaschke u.a., Angew. Chemie, 98 (1986), 810, mit Methacrylsäureanhydrid verestertes Kieselgel Diol 5 μm (Merck) werden mit 7,5 g Methacryloyl-cyclohexylethylamid nach der angegebenen Vorschrift copolymerisiert und aufgearbeitet. Man erhält 2,7 g modifiziertes Kieselgel mit einem Stickstoffgehalt von 0,7 %, entsprechend 9,8 Gew.-% gebundenem Poly-methacryloyl-cyclohexylethylamid.

Vergleichsbeispiel B

Analog zu Vergleichsbeispiel A werden 2,5 g mit Methacrylsäure veresterte Diolphase mit 7,5 g N-Acryloylphenylalaninethylester in 50 ml Toluol copolymerisiert und aufgearbeitet. Man erhält 2,75 g modifiziertes Kieselgel mit einem Stickstoffgehalt von 0,5 %, entsprechend 8,8 Gew.-% gebundenem Poly-N-acryloylphenylalaninethylester.

III. Trennungen

Im folgenden sind die Ergebnisse von chromatographischen Trennversuchen mit verschiedenen Racematen an den unter II. beschriebenen Adsorbentien aufgeführt. Für die Versuche wurden analytische Säulen von 25 cm Länge und 4 mm Innendurchmesser verwendet. Die Fließmittelgeschwindigkeit betrug jeweils 1 ml/min.

A. mit Adsorbens von Beispiel 4b

Beispiel 14: (±)-1,4-Dihydro-2,6-dimethyl-5-nitro-4-(2-trifluormethylphenyl)pyridin-3-carbonsäuremethylester
Eluent = n-Heptan/Dioxan (3/2)
$k'_1 = 3,45$
$\alpha = 1,14$

Beispiel 15: (±)-1,4-Dihydro-2,6-dimethyl-4-(2-trifluormethylphenyl)pyridin-3,5-dicarbonsäure-5-ethylester
Eluent = n-Heptan/Dioxan (1/1)
$k'_1 = 0{,}80$
$\alpha = 1{,}90$
R = 3,27

Beispiel 16: (±)-1,4-Dihydro-2,6-dimethyl-4-(2-nitrophenyl)-pyridin-3,5-dicarbonsäure-5-methylester
Eluent = n-Heptan/THF (3/2)
$k'_1 = 4{,}58$
$\alpha = 1{,}26$

Beispiel 17: (±)-1,4-Dihydro-2,6-dimethyl-5-nitro-4-(2-trifluormethylphenyl)-pyridin-3-carbonsäure
Eluent = n-Heptan/THF (3/2)
$k'_1 = 4{,}68$
$\alpha = 1{,}38$

Beispiel 18: (±)-Z-cis-2,2-dimethyl-3-[2-chlor-2-(4-chlorphenyl)vinyl]cyclopropancarbonsäure
Eluent = n-Heptan/Essigester (1/1)
$k'_1 = 0{,}93$
$\alpha = 1{,}10$

B. mit Adsorbens von Beispiel 6

Beispiel 19: (±)-1,4-Dihydro-2,6-dimethyl-5-nitro-4-(2-trifluormethylphenyl)-pyridin-3-carbonsäuremethylester
Eluent = n-Heptan/THF (3/2)
$k'_1 = 11{,}1$
$\alpha = 1{,}04$

Beispiel 20: (±)-1,4-Dihydro-2,6-dimethyl-4-(2-nitro-phenyl)-pyridin-3,5-dicarbonsäure-5-ethylester
Eluent = n-Heptan/Dioxan (3/1)
$k'_1 = 2{,}22$
$\alpha = 1{,}23$

Beispiel 21: (±)-Z-cis-2,2-dimethyl-3-[2-chlor-2-(4-chlorphenyl)vinyl]cyclopropancarbonsäure
Eluent = n-Heptan/Essigester (1/1)
$k'_1 = 0{,}68$
$\alpha = 1{,}06$

C. mit Adsorbens von Beispiel 8b

Beispiel 22: (±)-1,4-Dihydro-2,6-dimethyl-4-(2-trifluormethylphenyl)pyridin-3,5-dicarbonsäure-5-ethylester
Eluent = n-Heptan/THF (3/2)
$k'_1 = 4{,}75$
$\alpha = 1{,}37$

D. mit Adsorbens von Beispiel 9b

Beispiel 23: (±)-1,4-Dihydro-2,6-dimethyl-5-nitro-4-(2-trifluormethylphenyl)-pyridin-3-carbonsäuremethylester
Eluent = n-Heptan/Dioxan (3/1)
$k'_1 = 6,40$
$\alpha = 1,08$

E. mit Adsorbens von Beispiel 10b

Beispiel 24: (±)-1,4-Dihydro-2,6-dimethyl-5-nitro-4-(2-trifluormethylphenyl)-pyridin-3-carbonsäuremethylester
Eluent = n-Heptan/Dioxan (3/1)
$k'_1 = 3,62$
$\alpha = 1,12$

F. mit Adsorbens von Beispiel 11b

Beispiel 25: (±)-1,4-Dihydro-2,6-dimethyl-5-nitro-4-(2-trifluormethylphenyl)-pyridin-3-carbonsäuremethylester
Eluent = n-Heptan/Dioxan (3/1)
$k'_1 = 2,90$
$\alpha = 1,17$

G. mit Adsorbens von Beispiel 12b

Beispiel 26: (±)-1,4-Dihydro-2,6-dimethyl-5-nitro-4-(2-trifluormethylphenyl)-pyridin-3-carbonsäuremethylester
Eluent = n-Heptan/Dioxan (3/1)
$k'_1 = 2,4$
$\alpha = 1,10$

H. mit Adsorbens von Vergleichsbeispiel A

Beispiel 27: (±)-1,4-Dihydro-2,6-dimethyl-4-(2-trifluormethylphenyl)pyridin-3,5-dicarbonsäure-5-ethylester

I. mit Adsorbens von Vergleichsbeispiel B

Beispiel 28: (±)-1,4-Dihydro-2,6-dimethyl-4-(2-trifluormethylphenyl)pyridin-3,5-dicarbonsäure-5-ethylester
Eluent = n-Heptan/Dioxan (1/1)
$k'_1 = 1,15$
$\alpha = 1,0$
R = 0

**Patentansprüche**

1. Auf Kieselgel immobilisierte, optisch aktive Homo- und/oder Copolymere aus
(A) 10 - 100 Gew.-% optisch aktiver Monomereinheiten der Formel (5)

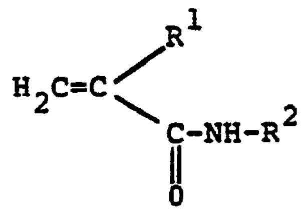

(5)

in welcher
$R^1$ - Wasserstoff oder Methyl, und
$R^2$ - eines der Stereoisomere der jeweils acht möglichen stereoisomeren Formen der optisch aktiven Reste der Formeln

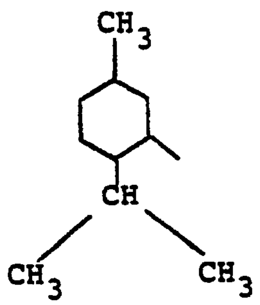

oder

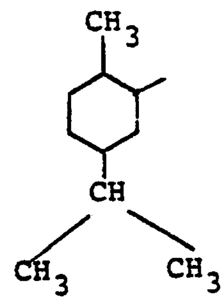

darstellen,
und
(B) 0 - 90 Gew.-%, Monomereinheiten aus der Gruppe $C_1$-$C_8$-Alkyl-(meth)acrylate, Styrol, Acrylnitril, (Meth)acrylamid, sowie am Stickstoff substituierte (Meth)acrylamide.

2. Auf Kieselgel immobilisierte Homo- und/oder Copolymere gemäß Anspruch 1, in welchen die Komponente A in Mengen von 30 - 100 Gew.-% und die Komponente B in Mengen von 70 - 0 Gew.-% vorhanden ist.

3. Auf Kieselgel immobilisierte Homo- und/oder Copolymere gemäß Ansprüchen 1 und 2, wobei eine weitere Copolymereinheit in Mengen von 0,1 - 50 Mol% anwesend ist, die an Kieselgel covalent binden kann oder eine funktionelle Gruppe trägt, die eine covalente Verknüpfung mit Kieselgel ermöglicht.

4. Auf Kieselgel immobilisierte Homo- und/oder Copolymere gemäß Anspruch 3, wobei die weitere Copolymereinheit in Mengen von 0,5 - 25 Mol% anwesend ist.

5. Auf Kieselgel immobilisierte Homo- und/oder Copolymere gemäß Ansprüchen 1 bis 4, in welchen die Komponente A aus Einheiten der Formel 5 besteht, in denen
$R^1$ - für Wasserstoff oder Methyl steht, und
$R^2$ - ein Stereoisomer der jeweils acht möglichen stereoisomeren Formen des optisch aktiven Restes der Strukturformel

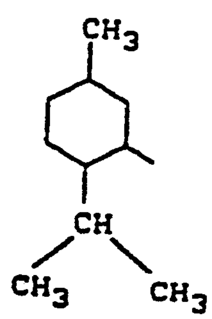

darstellt.

6. Auf Kieselgel immobilisierte Homo- und/oder Copolymere gemäß Ansprüchen 1 bis 5, in welchen die Komponente A besteht aus 1-Menthyl(meth)acrylamid, d-Menthyl(meth)acrylamid oder d-Neomenthyl(meth)acrylamid.

7. Verwendung von auf Kieselgel immobilisierte Homo- und/oder Copolymere gemäß Ansprüchen 1 bis 6 zur chromatographischen Trennung von racematischen Gemischen in die optischen Antipoden.

8. Auf Kieselgel immobilisierte Homopolymere gemäß Anspruch 1, in denen das Polymer ausschließlich aus der Komponente A besteht.

**Patentansprüche**

1. Optically active homopolymers and/or copolymers which are immobilized on silica gel and are composed of

(A) 10 – 100% by weight of optically active monomer units of the formula (5).

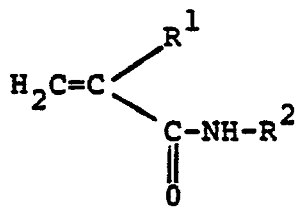

(5)

in which

$R^1$ represents hydrogen or methyl, and

$R^2$ represents one of the stereoisomers of the eight possible stereoisomeric forms of each of the optically active radicals of the formulae

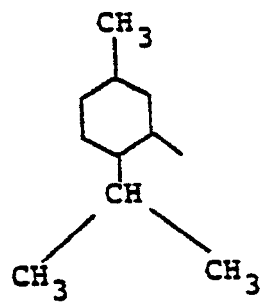

or

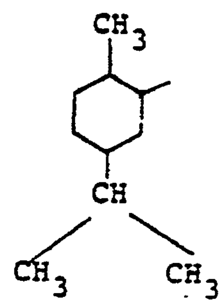

and

(B) 0 – 90% by weight of monomer units from the group consisting of $C_1$-$C_8$-alkyl (meth)acrylates, styrene, acrylonitrile (meth)acrylamide and also N-substituted (meth)acrylamides.

2. Homopolymers and/or copolymers immobilized on silica gel according to Claim 1 in which the component A is present in amounts of 30–100% by weight and the component B is present in amounts from 70–0% by weight.

3. Homopolymers and/or copolymers immobilized on silica gel according to Claims 1 and 2 which contain a further copolymer unit in amounts of 0.1–50 mol% which can bond covalently to silica gel or has a functional group which allows a covalent linkage with silica gel.

4. Homopolymers and/or copolymers immobilized on silica gel according to Claim 3 which contain the further copolymer unit in amounts of 0.5–25 mol%.

5. Homopolymer and/or copolymers immobilized on silica gel according to Claims 1 to 4 in which the component A is composed of units of the formula 5 in which $R^1$ represents hydrogen or methyl, and $R^2$ represents a stereoisomer of the eight possible stereoisomeric forms of the optically active radical of the structural formula

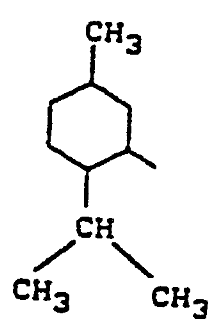

6. Homopolymers and/or copolymers immobilized on silica gel according to Claims 1 to 5 in which the component A is 1-menthyl(meth)acrylamide, d-menthyl(meth)acrylamide or d-neomenthyl(meth)acrylamide.

7. Use of homopolymers and/or copolymers immobilized on silica gel according to Claims 1 to 6 for chromatographic separation of racemic mixtures into the optical antipodes.

8. Homopolymers immobilized on silica gel according to Claim 1 in which the polymer is exclusively composed of the component A.

## Revendications

1. Homo- et/ou copolymères optiquement actifs immobilisés sur du gel de silice, constitués de

(A) 10–100% en poids d'unités monomères optiquement actives de formule (5)

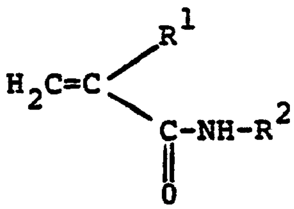

(5)

dans laquelle

$R^1$ – représente un atome d'hydrogène ou un groupe méthyle, et

$R^2$ – représente un des stéréo-isomères de chacune des huit formes stéréo-isomères possibles des radicaux optiquement actifs répondant aux formules

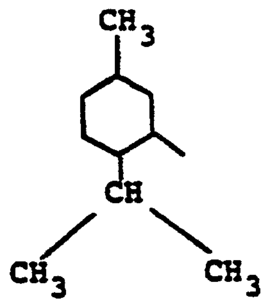

ou

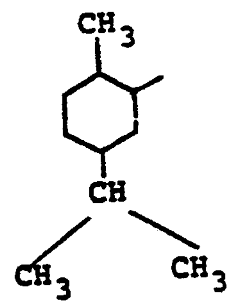

et

(B) 0– 90% en poids d'unités monomères choisies dans le groupe comprenant les (méth)acrylates d'alkyle en $C_1$–$C_8$, les (méth)acrylates, le styrène, l'acrylonitrile, le (méth)acrylamide, ainsi que les (méth)acrylamides substitués sur l'atome d'azote.

2. Homo- et/ou copolymères immobilisés sur du gel de silice selon la revendication 1, dans lesquels le constituant A est présent dans ces quantités de 30–100% en poids et le constituant B est présent dans des quantités de 70–0% en poids.

3. Homo- et/ou copolymères immobilisés sur du gel de silice selon les revendications 1 et 2, dans lesquels une unité copolymère supplémentaire est présente dans des quantités de 0,1–50% molaire, cette unité pouvant se lier de manière covalente au gel de silice ou portant un groupe fonctionnel qui permet une liaison covalente avec le gel de silice.

4. Homo- et/ou copolymères immobilisés sur du gel de silice selon la revendication 3, dans lesquels l'unité copolymère supplémentaire est présente dans des quantités de 0,5–25% molaire.

5. Homo- et/ou copolymères immobilisés sur du gel de silice selon les revendications 1 à 4, dans lesquels le constituant A se compose d'unités de formule (5), dans lesquelles

$R^1$ – représente un atome d'hydrogène ou un groupe méthyle, et

$R^2$ – représente un stéréo-isomère de chacun des huit formes stéréo-isomères possibles du radical optiquement actif répondant à la formule structurelle

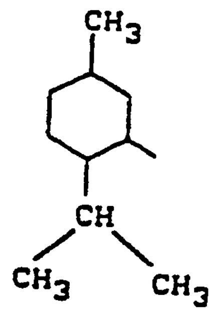

6. Homo- et/ou copolymères immobilisés sur du gel de silice selon les revendication 1 à 5, dans lesquels le constituant A se compose de 1–menthyl(méth)acrylamide, de d-menthyl(méth)-acrylamide ou de d-néomenthyl(méth)-acrylamide ou de d'-néomenthyl(méth)acrylamide.

7. Utilisation d'homopolymères et/ou de copolymères immobilisés sur du gel de silice selon les revendications 1 à 6 pour la séparation chromatographique de mélanges racémiques en antipodes optiques.

8. Homopolymères immobilisés sur du gel de silice selon la revendication 1, dans lesquels le polymère se compose exclusivement du constituant A.